# EUROPEAN PATENT APPLICATION

(11) **EP 4 563 340 A1**
(43) Date of publication of application: **04.06.2025**
(21) Application number: 23846344.2
(22) Date of filing: 20.07.2023
(51) Int. Cl.: B32B 27/00, B32B 27/18, B32B 38/18

(54) **COATED ARTICLE AND PRODUCTION METHOD THEREFOR**

(30) Priority: 26.07.2022 JP 2022118693
(71) Applicant: SHIN-ETSU CHEMICAL CO., LTD., Tokyo 1000005 (JP); Renais Co., Ltd., Mihara-shi, Hiroshima 729-0473 (JP)
(72) Inventor: YOSHII Ryosuke, Annaka-shi, Gunma 379-0224 (JP); GOTO Yuta, Annaka-shi, Gunma 379-0224 (JP); TSUCHIDA Kazuhiro, Annaka-shi, Gunma 379-0224 (JP); HIGUCHI Koichi, Annaka-shi, Gunma 379-0224 (JP); IWAI Kazufumi, Mihara-shi, Hiroshima 729-0473 (JP); ADACHI Maki, Mihara-shi, Hiroshima 729-0473 (JP); AMANO Ryo, Mihara-shi, Hiroshima 729-0473 (JP)
(74) Representative: Mewburn Ellis LLP
(86) International application number: PCT/JP2023/026538
(87) International publication number: WO 2024/024613

(57) **Abstract**

Provided is a coated article comprising a resinous base, a primer layer disposed on the resinous base, a hardcoat layer disposed on the primer layer, and an optically modified layer formed on a surface-layer portion of the hardcoat layer,
wherein the primer layer is a cured coating film formed from a primer composition comprising (A) a vinyl-based (co)polymer and (B) inorganic particles having a given median diameter, the vinyl-based (co)polymer (A) including (A-1) a vinyl-based (co)polymer having an alkoxysilyl group and the primer layer having a thickness of 1-20 µm, and
the hardcoat layer is a cured coating film formed from a silicone composition comprising (a) a silicone resin, (b) colloidal silica, and (c) an ultraviolet absorber, the hardcoat layer having a thickness of 1-15 µm.

## Description

### TECHNICAL FIELD

The present invention relates to a coated article and to a method for producing the same. More specifically, the invention relates to a coated article having a plastic or other organic resin substrate, a primer layer provided on the substrate, a hardcoat layer provided on the primer layer, and a photomodified layer formed on a surface-layer portion of the hardcoat layer, and to a method for producing the coated article.

### BACKGROUND ART

In recent years, transparent materials that are non-shattering or have a greater shatter resistance than glass have come to be widely used in place of transparent plate glass. For example, because plastic substrates, especially those made of polycarbonate resin or the like, have excellent properties such as transparency, impact resistance and heat resistance, they are used today as structural members in place of glass in a variety of applications, including windows for buildings and vehicles, and instrument covers.

However, the surface properties such as abrasion resistance and weather resistance are inferior to those of glass, and so improvements in the surface properties of polycarbonate molded articles are keenly awaited.

Patent Document 1 discloses, as a way to confer the surface of a resin molded article with the same degree of abrasion resistance as glass, a method which provides a protective film of siloxane hardcoating material and modifies the surface of the protective film by exposure to vacuum ultraviolet light, thus forming a photomodified film. However, when the resin molded article is placed under a high temperature, the photomodified film is unable to conform to thermal expansion of the resin, as a result of which cracks readily arise, leaving something to be desired in terms of heat resistance and weather resistance.

Patent Examples 2 and 3 disclose methods which involve covering a siloxane hardcoat layer with a mesh mask and training light from above the mask onto the hardcoat layer through openings in the mask to form, in alternation on the surface of a resin substrate, a photomodified layer and a siloxane hardcoat layer in a manner corresponding to the shape of the openings in the mesh mask, thereby relaxing the stress incurred by the photomodified layer due to expansion of the resin substrate and improving the heat resistance. However, a simpler method of production is desired.

Patent Document 4 reports that by either setting the thickness of an acrylic polymer-containing primer layer to at least 10 µm or forming a primer layer containing from 20 to 60 parts by weight of silica particles per 100 parts by weight of acrylic polymer, and forming thereon a siloxane hardcoat layer and a photomodified layer, the heat resistance when heated to 80°C improves.

However, when the primer layer is made thicker or a large amount of silica particles is added, cracking, early peeling, clouding of the applied film and the like readily arise in weathering tests, leading to a poor weather resistance. Moreover, there sometimes exists a desire for heat resistance at higher temperatures in excess of 100°C.

### PRIOR ART DOCUMENTS

### PATENT DOCUMENTS

Patent Document 1: JP No. 4536824
Patent Document 2: JP No. 6585758
Patent Document 3: WO 2020/044705
Patent Document 4: JP-A 2016-030392

### SUMMARY OF INVENTION

### TECHNICAL PROBLEM

In light of these circumstances, the object of this invention is to provide a coated article having an abrasion resistance comparable to that of glass and also having excellent heat resistance and weather resistance.

### SOLUTION TO PROBLEM

The inventors have conducted intensive investigations aimed at achieving the above object. As a result, they have discovered that a coated article having, on a resin substrate, a given primer layer which contains a vinyl (co)polymer having alkoxysilyl groups on the molecular structure, a given siloxane hardcoat layer provided on the primer layer, and a photomodified layer formed on a surface-layer portion of the hardcoat layer possesses an abrasion resistance comparable to that of glass and also has excellent heat resistance and weather resistance.

Accordingly, the invention provides:
1. A coated article having a resin substrate, a primer layer provided on the resin substrate, a hardcoat layer provided on the primer layer, and a photomodified layer formed on a surface-layer portion of the hardcoat layer,
   wherein the primer layer is a cured film of a primer composition which includes:
      (A) 100 parts by weight of a vinyl (co)polymer, and
      (B) 1 to 19 parts by weight of inorganic particles having a median diameter, as measured by the dynamic light scattering method, of from 1 to 100 nm,
      the vinyl (co)polymer (A) including (A-1) a vinyl (co)polymer having alkoxysilyl groups and said primer layer having a film thickness of from 1 to 20 µm; and
   the hardcoat layer is a cured film of a silicone composition which includes:
      (a) a silicone resin obtained by (co)hydrolytically condensing at least one compound selected from alkoxysilanes of formula (1) below

         R¹ ₘSi(OR²)₄₋ₘ (1)

         (wherein each R¹ is independently a hydrogen atom or a substituted or unsubstituted monovalent hydrocarbon group and a plurality of R¹ may mutually bond to form a linked group, each R² is independently an alkyl group of 1 to 3 carbon atoms, and m is 0, 1 or 2) and (partial) hydrolytic condensates thereof,
      (b) colloidal silica, and
      (c) an ultraviolet absorber,
      said hardcoat layer having a film thickness of from 1 to 15 µm;
2. The coated article of 1 above, wherein the photomodified layer includes silicon dioxide;
3. The coated article of 1 or 2 above, wherein the ultraviolet absorber (c) includes a reactive ultraviolet absorber of general formula (2) below 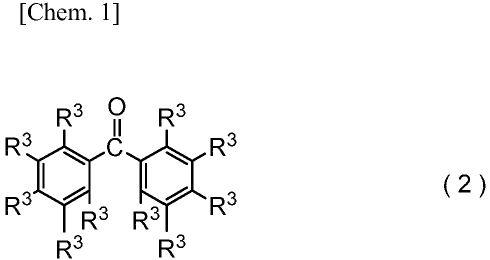
   [wherein each R³ is independently a hydrogen atom, a hydroxyl group, an alkyl group of 1 to 5 carbon atoms or a group of general formula (3) below, at least one occurrence of R³ being a group of general formula (3) below

      *-O-(CH₂)ⱼ-SiR⁴ₖ(OR⁵)₃₋ₖ (3)
   (wherein R⁴ and R⁵ are each independently an alkyl group of 1 to 5 carbon atoms, j is an integer from 1 to 8, k is an integer from 0 to 2, and the asterisk * denotes a bond with a neighboring atom)] and a (partial) hydrolytic condensate thereof;
4. The coated article of any of 1 to 3 above, wherein the hardcoat layer has a surface hardness as measured by the nanoindentation method of from 0.10 to 0.50 GPa;
5. The coated article of any of 1 to 4 above, wherein the inorganic particles (B) include one or more type of particle selected from silica, zinc oxide, titanium oxide and cerium oxide;
6. The coated article of any of 1 to 5 above, wherein the primer composition includes (A-1) a vinyl (co)polymer having alkoxysilyl groups and ultraviolet-absorbing groups;
7. The coated article of any of 1 to 6 above, wherein the primer composition further includes (C) one or more ultraviolet absorber selected from triazine derivatives and benzophenone derivatives;
8. The coated article of any of 1 to 7 above wherein the primer composition further includes (D) a hindered amine light stabilizer;
9. The coated article of any of 1 to 8 above, wherein the film thickness of the primer layer is from 3 to 15 µm and the film thickness of the hardcoat layer is from 3 to 13 µm; and
10. A method for producing the coated article of any of 1 to 9 above, which method includes the step of forming a photomodified layer on a surface-layer portion of the hardcoat layer by irradiating a surface of the hardcoat layer with light having a wavelength of 300 nm or less.

### ADVANTAGEOUS EFFECTS OF INVENTION

This invention makes it possible to provide a coated article possessing an abrasion resistance comparable to that of glass and also having excellent heat resistance and weather resistance. Moreover, with this invention, no specialized operations or tools are needed during photomodification of the hardcoat layer, nor is there any need for specialized post-treatment following photomodification. As a result, excellent abrasion resistance, heat resistance and weather resistance can more easily be imparted to resin substrates of various shapes.

### DESCRIPTION OF EMBODIMENTS

The invention is described more fully below.

The coated article of the invention is a coated article having a resin substrate, a primer layer provided on the resin substrate, a hardcoat layer provided on the primer layer, and a photomodified layer formed on a surface-layer portion of the hardcoat layer,
the primer layer being a cured film of a primer composition that includes an alkoxysilyl group-containing vinyl (co)polymer and
the hardcoat layer being a cured film of a silicone composition that includes (a) a silicone resin, (b) colloidal silica and (c) an ultraviolet absorber.

One characteristic of the coated article of the invention is that it includes an ultraviolet absorber in the hardcoat layer. By including an ultraviolet absorber in the hardcoat layer, as will be explained later, during photomodification by irradiating the hardcoat layer with light, the light is prevented from reaching the primer layer, keeping the abrasion resistance from worsening due to peeling of the film and a loss of adhesion.

By providing a primer layer which includes a vinyl (co)polymer containing alkoxysilyl groups on the molecular structure, reactivity with siloxane in the siloxane hardcoat layer is imparted by alkoxysilyl groups included in the primer layer and/or silanol groups formed by their hydrolysis. As a result, adhesion between the substrate and the hardcoat layer through the primer layer improves, along with which the alkoxysilyl groups and/or silanol groups formed by their hydrolysis crosslink, thereby enhancing the heat resistance and manifesting excellent abrasion resistance and weather resistance.

### <Resin Substrate>

The resin substrate in the coated article of the invention is not particularly limited, various organic resin substrates being suitable for use. Specific examples include polycarbonate resins, polystyrene resins, acrylic resins, modified acrylic resins, urethane resins, thiourethane resins, polycondensates of halogenated bisphenol A and ethylene glycol, acrylic urethane resins, halogenated aryl group-containing acrylic resins and sulfur-containing resins. Of these, polycarbonate resins are preferred.

Additional examples include these resin substrates whose surfaces have been treated, such as those that have been chemical conversion treated, corona discharge treated, plasma treated, or treated with an acid or alkali solution. Laminates in which the surface layer is formed of a type of resin differing from the substrate itself may also be used.

Specific examples of laminates include those produced by a co-extrusion or lamination process which have a surface layer of acrylic resin or urethane resin on a polycarbonate resin substrate or a surface layer of acrylic resin on a polyester resin substrate.

### <Primer Layer>

The primer layer in the coated article of the invention is a cured film of a primer composition having components (A) and (B) below:
(A) a vinyl (co)polymer, and
(B) inorganic particles having a median diameter, as measured by the dynamic light scattering method, of 100 nm or less.

### [(A) Vinyl (Co)polymer]

### (1) (A-1) Vinyl (Co)polymer Having Alkoxysilyl Groups

The vinyl (co)polymer of component (A) includes (A-1) an alkoxysilyl group-containing vinyl (co)polymer. Examples of the alkoxysilyl group-containing vinyl (co)polymer of component (A-1) include vinyl (co)polymers in which alkoxysilyl groups are attached to the main chain through Si-C bonds. Such (co)polymers are exemplified by polymers of a vinyl monomer having an alkoxysilyl group attached through a Si-C bond, and copolymers of a vinyl monomer having an alkoxysilyl group attached through a Si-C bond and another vinyl monomer.

Here, the vinyl monomer having an alkoxysilyl group attached through a Si-C bond that is used may be any having one vinyl polymerizable functional group and one or more alkoxysilyl group on the molecule.

The vinyl polymerizable functional group is exemplified by organic groups of 2 to 12 carbon atoms having a vinyl, vinyloxy, (meth)acryloxy or (α-methyl)styryl group. Specific examples include vinyl, 5-hexenyl, 9-decenyl, vinyloxymethyl, 3-vinyloxypropyl, (meth)acryloxymethyl, 3-(meth)acryloxypropyl, 11-(meth)acryloxyundecyl, vinylphenyl (styryl), isopropenylphenyl (α-methylstyryl) and vinylphenylmethyl (vinylbenzyl) groups. Of these, in terms of reactivity and availability, a (meth)acryloxypropyl group is preferred. In this invention, "(meth)acryl" means acryl and/or methacryl.

Examples of the alkoxy group in the alkoxysilyl group include methoxy, ethoxy, n-propoxy, isopropoxy, n-butoxy, isobutoxy, sec-butoxy and tert-butoxy groups. Of these, in terms of availability and the ease of controlling the hydrolyzability, methoxy and ethoxy groups are preferred.

Examples of substituents other than the above alkoxy groups that bond to silicon atoms include alkyl groups such as methyl, ethyl, n-propyl, n-hexyl and n-decyl groups, and aryl groups such as the phenyl group. Of these, in terms of the availability, methyl groups are preferred.

Examples of vinyl monomers in which an alkoxysilyl group is attached through a Si-C bond include
methacryloxymethyltrimethoxysilane,
methacryloxypropyltrimethoxysilane,
methacryloxyundecyltrimethoxysilane,
methacryloxypropylmethyldimethoxysilane,
methacryloxypropyldimethylmethoxysilane,
methacryloxypropyltriethoxysilane,
acryloxypropyltrimethoxysilane,
acryloxypropylmethyldimethoxysilane,
acryloxypropyldimethylmethoxysilane,
acryloxypropyltriethoxysilane,
acryloxymethyltrimethoxysilane,
acryloxyundecyltrimethoxysilane,
vinyltrimethoxysilane, vinyltriethoxysilane,
vinylmethyldimethoxysilane, allyltrimethoxysilane,
styryltrimethoxysilane, styrylmethyldimethoxysilane and
styryltriethoxysilane,

Of these, from the standpoints of, for example, availability, handleability,
crosslink density and reactivity,
methacryloxypropyltrimethoxysilane,
methacryloxypropylmethyldimethoxysilane,
methacryloxypropyldimethylmethoxysilane,
acryloxypropyltrimethoxysilane and
acryloxypropylmethyldimethoxysilane
are preferred.

When, for example, the alkoxysilyl group is trimethoxysilane, the amount of alkoxysilyl groups in component (A) is preferably from 1 to 50 wt%, more preferably from 2 to 30 wt%, and even more preferably from 3 to 15 wt%, of component (A) overall. At 1 wt% or more, siloxane network formation due to crosslinking between vinyl (co)polymers or with inorganic filler, etc. is adequate, the coefficient of linear expansion of the film is low and the heat resistance and durability increase further. In addition, due to reaction with siloxane in the hardcoat layer, adhesion with the hardcoat layer and weather resistance increase further. At an amount of alkoxysilyl groups in component (A) of up to 50 wt%, the crosslink density does not become too high, a decrease in adhesion due to excessive hardness is suppressed, and crack formation in the film due to the post-crosslinking over time of unreacted alkoxysilyl groups can be suppressed.

Other vinyl monomers that are copolymerizable with the above-described vinyl monomer in which an alkoxysilyl group is attached through a Si-C bond are not particularly limited so long as they are copolymerizable vinyl monomers. Examples include (meth)acrylic monomers, (meth)acrylic acid esters, (meth)acrylonitriles, (meth)acrylamides, alkyl vinyl ethers, alkyl vinyl esters, styrenes, and derivatives of these.

Specific examples of (meth)acrylic acid esters and derivatives thereof include (meth)acrylic acid esters of monohydric alcohols, such as methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, t-butyl (meth)acrylate, n-pentyl (meth)acrylate, isopentyl (meth)acrylate, n-hexyl (meth)acrylate, isohexyl (meth)acrylate, n-heptyl (meth)acrylate, isoheptyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, n-undecyl (meth)acrylate, n-dodecyl (meth)acrylate, lauryl (meth)acrylate, palmityl (meth)acrylate, stearyl (meth)acrylate, cyclohexyl (meth)acrylate, 4-methylcyclohexyl (meth)acrylate, 4-t-butylcyclohexyl (meth)acrylate, isobornyl (meth)acrylate, dicyclopentanyl (meth)acrylate, dicyclopentenyloxyethyl (meth)acrylate and benzyl (meth)acrylate;
(meth)acrylic acid esters of alkoxy(poly)alkylene glycols, such as 2-methoxyethyl (meth)acrylate, 2-methoxypropyl (meth)acrylate, 3-methoxypropyl (meth)acrylate, 2-methoxybutyl (meth)acrylate, 3-methoxybutyl (meth)acrylate, 4-methoxybutyl (meth)acrylate, methoxypolyethylene glycol (meth)acrylate (the number of ethylene glycol units being preferably, for example, from 2 to 20), and methoxypolypropylene glycol (meth)acrylate (the number of propylene glycol units being preferably, for example, from 2 to 20);
mono(meth)acrylic acid esters of monohydric or polyhydric alcohols, such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, glycerol mono(meth)acrylate, pentaerythritol mono(meth)acrylate, polyethylene glycol mono(meth)acrylate (the number of ethylene glycol units being preferably, for example, from 2 to 20) and polypropylene glycol mono(meth)acrylate (the number of propylene glycol units being preferably, for example, from 2 to 20);
poly(meth)acrylic acid esters of polyhydric alcohols, such as ethylene glycol di(meth)acrylate, propylene glycol di(meth)acrylate, butylene glycol di(meth)acrylate, glycerol di(meth)acrylate, glycerol tri(meth)acrylate, pentaerythritol di(meth)acrylate, pentaerythritol tetra(meth)acrylate, 1,4-cyclohexanediol di(meth)acrylate, polyethylene glycol di(meth)acrylate (the number of ethylene glycol units being preferably, for example, from 2 to 20), and polypropylene glycol di(meth)acrylate (the number of propylene glycol units being preferably, for example, from 2 to 20);
(poly)esters of nonpolymerizable polybasic acids and hydroxyalkyl (meth)acrylates, such as mono[2-(meth)acryloyloxyethyl] succinate, di[2-(meth)acryloyloxyethyl] succinate, mono[2-(meth)acryloyloxyethyl] adipate, di[2-(meth)acryloyloxyethyl] adipate, mono[2-(meth)acryloyloxyethyl] phthalate and di[2-(meth)acryloyloxyethyl] phthalate;
amino group-containing (meth)acrylic acid esters, such as 2-aminoethyl (meth)acrylate, 2-(N-methylamino)ethyl (meth)acrylate, 2-(N,N-dimethylamino)ethyl (meth)acrylate, 2-(N-ethylamino)ethyl (meth)acrylate, 2-(N,N-diethylamino)ethyl (meth)acrylate, 3-(N,N-dimethylamino)propyl (meth)acrylate and 4-(N,N-dimethylamino)butyl (meth)acrylate; and
epoxy group-containing (meth)acrylic acid esters, such as glycidyl (meth)acrylate.

Specific examples of (meth)acrylonitrile derivatives include α-chloroacrylonitrile, α-chloromethylacrylonitrile, α-trifluoromethylacrylonitrile, α-methoxyacrylonitrile, α-ethoxyacrylonitrile and vinylidene cyanide.

Specific examples of (meth)acrylamide derivatives include N-methyl (meth)acrylamide, N,N-dimethyl (meth)acrylamide, N-ethyl (meth)acrylamide, N,N-diethyl (meth)acrylamide, N-methoxy (meth)acrylamide, N,N-dimethoxy (meth)acrylamide, N-ethoxy (meth)acrylamide, N,N-diethoxy (meth)acrylamide, diacetone (meth)acrylamide, N-methylol (meth)acrylamide, N-(2-hydroxyethyl) (meth)acrylamide, N,N-dimethylaminomethyl (meth)acrylamide,
N-(2-dimethylamino)ethyl (meth)acrylamide, N,N'-methylenebis(meth)acrylamide and N,N'-ethylenebis(meth)acrylamide.

Specific examples of alkyl vinyl ethers include methyl vinyl ether, ethyl vinyl ether, butyl vinyl ether and hexyl vinyl ether.

Specific examples of alkyl vinyl esters include vinyl formate, vinyl acetate, vinyl acrylate, vinyl butyrate, vinyl caproate and vinyl stearate.

Specific examples of styrene and derivatives thereof include styrene, α-methylstyrene and vinyltoluene.

Of these monomers, (meth)acrylic acid esters are preferred; methyl (meth)acrylate, ethyl (meth)acrylate, isopropyl (meth)acrylate, n-butyl (meth)acrylate, isobutyl (meth)acrylate, n-hexyl (meth)acrylate, 2-ethylhexyl (meth)acrylate, isononyl (meth)acrylate, lauryl (meth)acrylate, cyclohexyl (meth)acrylate, 4-methylcyclohexyl (meth)acrylate, 4-t-butylcyclohexyl (meth)acrylate, isobornyl (meth)acrylate, dicyclopentanyl (meth)acrylate, dicyclopentenyloxyethyl (meth)acrylate and glycidyl (meth)acrylate are more preferred; and methyl (meth)acrylate and glycidyl (meth)acrylate are still more preferred.

Monomers such as these may be used singly or two or more may be used in admixture.

Alternatively, a compound obtained by chemically bonding the subsequently described ultraviolet absorber (C) to a vinyl copolymer may be used as component (A-1). In this case, the polymer can be obtained by copolymerizing a (meth)acrylic monomer having ultraviolet-absorbing groups on the molecule. The (meth)acrylic monomer having ultraviolet-absorbing groups is exemplified by benzotriazole compounds of general formula (4) below.

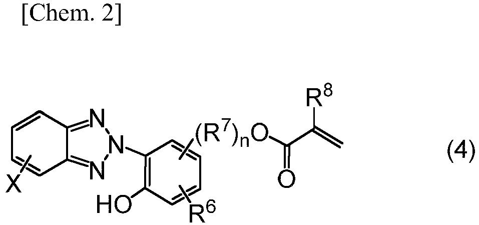

In the formula, X is a hydrogen atom or a chlorine atom, R⁶ is a hydrogen atom, a methyl group or a tertiary alkyl group of 4 to 8 carbon atoms, R⁷ is a single bond or a linear or branched alkylene group of 2 to 10 carbon atoms, and R⁸ is a hydrogen atom or a methyl group.

In above general formula (4), examples of the tertiary alkyl group of 4 to 8 carbon atoms represented by R⁶ include tert-butyl, tert-pentyl, tert-hexyl, tert-heptyl, tert-octyl and di-tert-octyl groups.

The alkylene group of 2 to 10 carbon atoms represented by R⁷ may be linear or branched. Examples include ethylene, trimethylene, propylene, tetramethylene, 1,1-dimethyltetramethylene, pentamethylene, hexamethylene, heptamethylene, octamethylene, nonamethylene and decamethylene groups.

Specific examples of benzotriazole compounds represented by general formula (4) above include 2-(2'-hydroxy-5'-(meth)acryloxyphenyl)-2H-benzotriazole, 2-(2'-hydroxy-3'-tert-butyl-5'-(meth)acryloxymethylphenyl)-2H-benzotriazole, 2-[2'-hydroxy-5'-(2-(meth)acryloxyethyl)phenyl]-2H-benzotriazole, 2-[2'-hydroxy-3'-tert-butyl-5'-(2-(meth)acryloxyethyl)phenyl]-5-chloro-2H-benzotriazole and 2-[2'-hydroxy-3'-methyl-5'-(8-(meth)acryloxyoctyl)phenyl]-2H-benzotriazole.

The amount of ultraviolet-absorbing groups bonded to the vinyl copolymer is preferably from 1 to 20 wt%, and more preferably from 5 to 15 wt%, of the vinyl copolymer serving as component (A-1). Including at least 1 wt% of the above ultraviolet-absorbing groups is desirable because the ultraviolet-absorbing properties are good and the weather resistance is good. Including up to 20 wt% is desirable because clouding of the film can be prevented and the cracking resistance is good.

Component (A-1) may be used singly or two or more may be used together.

It is preferable for component (A-1) to be, in particular, a compound having constitutional units (i) to (iii) below. Preferred use can be made of a vinyl copolymer having alkoxysilyl groups and ultraviolet-absorbing groups; a compound which includes constitutional units (i) to (iv) below is more preferred.

The constitutional units included in component (A-1) may be arranged in any order. Component (A-1) may be an alternating copolymer, a random copolymer or a block copolymer. 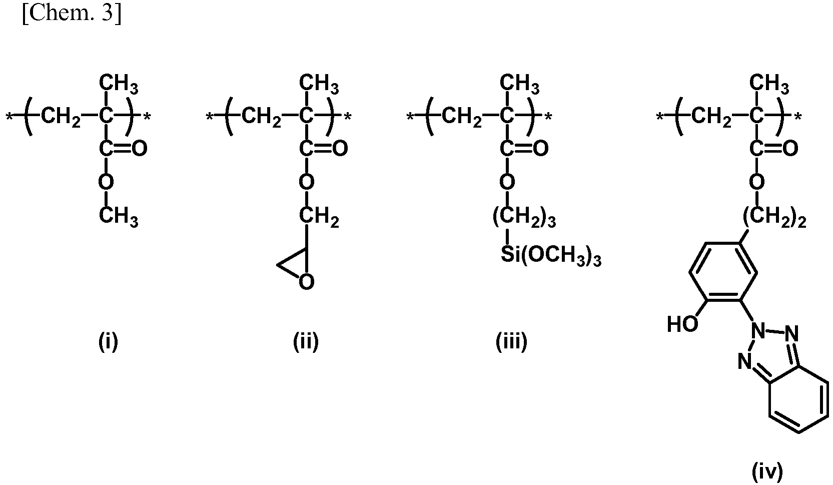 (In the formulas, an asterisk * represents a bond to a neighboring constitutional unit.)

Component (A-1) can be obtained by adding a radical polymerization initiator selected from among peroxides such as dicumyl peroxide and benzoyl peroxide and azo compounds such as azobisisobutyronitrile to a solution containing the above monomer, and carrying out a polymerization reaction under heating (e.g., at between 50°C to 150°C, especially 70°C to 120°C, for 1 to 10 hours, especially 3 to 8 hours).

The vinyl (co)polymer serving as component (A-1) has a polystyrene-equivalent weight-average molecular weight, as determined by gel permeation chromatography (GPC), of preferably from 50,000 to 1,000,000, and more preferably from 60,000 to 800,000. At a molecular weight of up to 1,000,000, the viscosity does not become too high and the handleability is better; at a molecular weight of 50,000 or more, appearance defects such as clouding of the film are suppressed and better adhesion, durability and weather resistance can be obtained.

### (2) (A-2) Vinyl (Co)polymer Having No Alkoxysilyl Groups

The primer composition of the invention may include (A-2) a vinyl copolymer having no alkoxysilyl groups.

The vinyl (co)polymer having no alkoxysilyl groups is not particularly limited, and may be obtained by (co)polymerizing a monomer other than the above-described vinyl monomer to which an alkoxysilyl group is attached through a Si-C bond.

The monomer other than vinyl monomers to which an alkoxysilyl group is attached through a Si-C bond that serves as the starting material for component (A-2) is exemplified by the same compounds as the copolymerizable monomers other than vinyl monomers to which an alkoxysilyl group is attached through a Si-C bond that are mentioned above in connection with component (A-1), and is illustrated by the same specific examples.

One of these monomers may be used alone or two or more may be used together as the vinyl monomer serving as the starting material for component (A-2).

Of these, (meth)acrylic acid esters are preferred; methyl (meth)acrylate, ethyl (meth)acrylate, isopropyl (meth)acrylate, n-butyl (meth)acrylate, isobutyl (meth)acrylate, n-hexyl (meth)acrylate, 2-ethylhexyl (meth)acrylate, isononyl (meth)acrylate, lauryl (meth)acrylate, cyclohexyl (meth)acrylate, 4-methylcyclohexyl (meth)acrylate, 4-t-butylcyclohexyl (meth)acrylate, isobornyl (meth)acrylate, dicyclopentanyl (meth)acrylate and dicyclopentenyloxyethyl (meth)acrylate are more preferred; methyl (meth)acrylate is even more preferred.

Polymerization may be carried out under known conditions and is not particularly limited as to such conditions as the reaction temperature, time and polymerization initiator. For example, component (A-2) can be easily obtained by carrying out the reaction at between 50°C and 150°C, especially between 70°C and 120°C, for 1 to 10 hours, especially 3 to 8 hours, using a radical polymerization initiator selected from peroxides such as dicumyl peroxide and benzoyl peroxide or azo compounds such as azobisisobutyronitrile.

A commercial product may be used as component (A-2). Specific examples include (meth)acrylic acid ester resins such as Dianal^{®} BR-85, BR-88 and LR-1065 from Mitsubishi Rayon Co., Ltd.

Component (A-2) may be of one type used alone or two or more may be used together.

Component (A-2) has a polystyrene-equivalent weight-average molecular weight as determined by GPC of preferably from 50,000 to 1,000,000, and more preferably from 60,000 to 800,000. When the molecular weight is too large, the viscosity may become too high and synthesis may be difficult, or component (A-2) may become difficult to handle. When the molecular weight is too small, appearance defects such as film clouding may arise or sufficient adhesion, durability and weather resistance may be unattainable.

In cases where component (A-1) and component (A-2) are used together, the polystyrene-equivalent weight-average molecular weight as determined by GPC of components (A-1) and (A-2) as a whole is preferably from 6,000 to 1,000,000, and more preferably from 50,000 to 800,000. When the molecular weight is too large, the viscosity may become too high, making synthesis difficult, or these components may become difficult to handle. When the molecular weight is too small, appearance defects such as film clouding may arise or sufficient adhesion, durability and weather resistance may be unattainable.

Also, in cases where component (A-1) and component (A-2) are used together, the mixing ratio by weight of component (A-1) and component (A-2), expressed as (A-1) : (A-2), is from 3:1 to 1:3, preferably from 2:1 to 1:2, and more preferably from 3:2 to 2:3. When the (A-1) content is too high, appearance defects such as film clouding may arise or sufficient adhesion, durability and weather resistance may be unattainable. When the (A-2) content is too high, the viscosity may become too high, resulting in poor handleability, and the adhesion, durability and weather resistance of the film may be inadequate.

### [(B) Inorganic Particles]

Component (B) consists of inorganic particles having a median diameter, as measured by the dynamic light scattering method, of from 1 to 100 nm. The inorganic particles may be, for example, particles of known inorganic oxides such as silica, alumina, cerium oxide, zirconium oxide, zinc oxide or titanium oxide, the particles being of one type used alone or of two or more types used together. Of these, silica, zinc oxide, titanium oxide and cerium oxide particles are preferred.

By using the above particles, the hardness and abrasion resistance of the film can be increased. In addition, by using particles of, for example, cerium oxide, zirconium oxide, zinc oxide or titanium oxide, the ultraviolet-shielding ability can be further increased. Of the above particles, silica particles and/or zinc oxide particles are especially preferred because the film appearance and weather resistance resulting from their use are good.

The above inorganic particles have a median diameter in the volumetric particle size distribution measured by the dynamic light scattering method that is from 1 to 100 nm, preferably from 3 to 50 nm, and more preferably from 5 to 40 nm. At a median diameter greater than 100 nm, the transparency of the film due to the scattering of light in the visible range is inadequate; at a median diameter less than 1 nm, the film hardness, abrasion resistance and weather resistance are inferior.

In this invention, an instrument such as the Nanotrac UPA-EX150 (from Nikkiso Co., Ltd.) may be used for measurement by the dynamic light scattering method.

The content of the above inorganic particles per 100 parts by weight of the vinyl (co)polymer serving as component (A) is from 1 to 19 parts by weight, preferably from 3 to 16 parts by weight, and more preferably from 5 to 15 parts by weight. At less than 1 part by weight, the weather resistance is inadequate; at more than 19 parts by weight, a decrease in film adhesion and film appearance defects such as clouding arise, cracks readily form during weathering tests, and the weather resistance worsens.

To prevent yellowing and surface deterioration of the resin substrate, the primer composition preferably includes (C) an ultraviolet absorber and, as an ultraviolet stabilizer, (D) a hindered amine light stabilizer.

### [(C) Ultraviolet Absorber]

The ultraviolet absorber serving as component (C) may be included, as described above, in a form that is chemically bonded to the vinyl (co)polymer serving as component (A-1), or may be included as an additive. In cases where it is incorporated as an additive, benzophenone derivatives, benzotriazole derivatives, cyanoacrylate derivatives and triazine derivatives are preferred. Specific examples include 2,4-dihydroxybenzophenone, 2,2',4,4'-tetrahydroxybenzophenone, 2-hydroxy-4-methoxybenzophenone, 2-hydroxy-4-methoxybenzophenone-5-sulfonic acid, 2-hydroxy-4-n-octoxybenzophenone, 2-hydroxy-4-n-dodecyloxybenzophenone, 2-hydroxy-4-n-benzyloxybenzophenone, 2,2'-dihydroxy-4,4'-dimethoxybenzophenone, 2,2'-dihydroxy-4,4'-diethoxybenzophenone, 2,2'-dihydroxy-4,4'-dipropoxybenzophenone, 2,2'-dihydroxy-4,4'-dibutoxybenzophenone, 2,2'-dihydroxy-4-methoxy-4'-propoxybenzophenone, 2,2'-dihydroxy-4-methoxy-4'-butoxybenzopheone and 2,3,4-trihydroxybenzophenone; 2-(2-hydroxy-5-t-methylphenyl)benzotriazole, 2-(2-hydroxy-5-t-octylphenyl)benzotriazole and 2-(2-hydroxy-3,5-di-t-butylphenyl)benzotriazole; and (2-(4,6-diphenyl-1,3,5-triazine-2-yl)-5-(hexyloxy)phenol, Tinuvin 400 (BASF), Tinuvin 405 (BASF), Tinuvin 460 (BASF), Tinuvin 477 (BASF), Tinuvin 479 (BASF), Tinuvin 1577ED (BASF) and Tinuvin 1600 (BASF).

One of these organic ultraviolet absorbers may be used alone or two or more may be used together, although it is preferable to use two or more together. Using a triazine derivative and a benzophenone derivative together is especially preferred.

In cases where an ultraviolet absorber is used, the total content thereof per 100 parts by weight of component (A) is preferably from 2 to 50 parts by weight, and more preferably from 10 to 30 parts by weight. At 2 parts by weight or more, the weather resistance improves further; at up to 50 parts by weight, decreased film adhesion and film appearance defects such as clouding can be suppressed.

In cases where a triazine derivative is used as the ultraviolet absorber, the amount thereof per 100 parts by weight of component (A) is preferably from 1 to 10 parts by weight, and more preferably from 2 to 5 parts by weight. Including 1 part by weight or more of the triazine derivative is desirable because the ultraviolet-absorbing properties are good and the weather resistance is good. Including up to 10 parts by weight is desirable because film clouding can be prevented and the resistance to cracking is good.

When a benzophenone derivative is used as the ultraviolet absorber, the amount thereof per 100 parts by weight of component (A) is preferably from 7 to 40 parts by weight, and more preferably from 10 to 25 parts by weight. Including 7 parts by weight or more of benzophenone derivative is desirable because the ultraviolet-absorbing properties are good and the weather resistance is good. Including up to 40 parts by weight is desirable because film clouding can be prevented and the resistance to cracking is good.

### [(D) Hindered Amine Light Stabilizer]

The primer composition preferably includes (D) a hindered amine light stabilizer. One having one or more cyclic hindered amine structure on the molecule, good compatibility with the primer composition used in this invention and low volatility is preferred.

Specific examples of hindered amine light stabilizers include 3-dodecyl-1-(2,2',6,6 '-tetramethyl-4-piperidinyl)pyrrolidine-2,5-dione, N-methyl-3-dodecyl-1-(2,2',6,6'-tetramethyl-4-piperidinyl)pyrrolidine-2,5-dione, N-acetyl-3-dodecyl-1-(2,2',6,6 '-tetramethyl-4-piperidinyl)pyrrolidine-2,5-dione, bis(2,2',6,6'-tetramethyl-4-piperidyl) sebacate, bis(1,2,2',6,6'-pentamethyl-4-piperidyl) sebacate, tetrakis(2,2',6,6'-tetramethyl-4-piperidyl) 1,2,3,4-butanetetracarboxylate, tetrakis(1,2,2',6,6'-pentamethyl-4-piperidyl) 1,2,3,4-butanetetracarboxylate, Tinuvin 123 (BASF), Tinuvin 249 (BASF), Tinuvin 622-SF (BASF), Tinuvin 765 (BASF), condensates of 1,2,3,4-butanetetracarboxylic acid with 2,2',6,6'-tetramethylpiperidinol and tridecanol, 8-acetyl-3-dodecyl-7,7',9,9'-tetramethyl-1,3,8-triazaspiro[4,5]decane-2,4-dione, condensates of 1,2,3,4-butanetetracarboxylic acid with 1,2,6,6'-pentamethyl-4-piperidinol and β,β,β',β'-tetramethyl-3,9-(2,4,8,10-tetraoxaspiro[5,5']undecane)diethanol, and condensates of 1,2,3,4-butanetetracarboxylic acid with 2,2',6,6'-pentamethyl-4-piperidinol and β,β,β',β'-tetramethyl-3,9-(2,4,8,10-tetraoxaspiro[5,5']undecane)diethanol. Additional examples include, for the purpose of immobilizing the light stabilizer, silyl-modified light stabilizers of the sort mentioned in JP-B S61-56187, such as 2,2,6,6-tetramethylpiperidino-4-propyltrimethoxysilane, 2,2',6,6'-tetramethylpiperidino-4-propylmethyldimethoxysilane, 2,2',6,6'-tetramethylpiperidino-4-propyltriethoxysilane, 2,2',6,6'-tetramethylpiperidino-4-propylmethyldiethoxysilane, and (partial) hydrolyzates of these. These light stabilizers may be used singly or two or more may be used in admixture. Of these, a neutral hindered amine light stabilizer (TINUVIN 249, from BASF Japan Ltd.) is preferred.

When a hindered amine light stabilizer is used, the content thereof per 100 parts by weight of component (A) is preferably from 0.1 to 10 parts by weight, more preferably from 0.5 to 7 parts by weight, and still more preferably from 1 to 5 parts by weight. A content of 0.1 part by weight or more is desirable because the weather resistance is good; a content of up to 10 parts by weight is desirable because decreased film adhesion and film appearance defects such as clouding can be suppressed.

### [(E) Solvent]

The primer composition may include a solvent. The solvent is not particularly limited so long as it is one which dissolves or disperses the above components. However, an organic solvent of high polarity is preferred.

Specific examples of organic solvents include alcohols such as methanol, ethanol, isopropyl alcohol, n-butanol, isobutanol, t-butanol, cyclohexanol and diacetone alcohol; ketones such as methyl ethyl ketone, methyl propyl ketone, diethyl ketone, methyl isobutyl ketone, cyclohexanone and diacetone alcohol; ethers such as dipropyl ether, dibutyl ether, anisole, dioxane, ethylene glycol monoethyl ether, ethylene glycol monobutyl ether, propylene glycol monomethyl ether and propylene glycol monomethyl ether acetate; and esters such as ethyl acetate, propyl acetate, butyl acetate and cyclohexyl acetate. One or a mixture of two or more selected from the group consisting of these may be used. Of these, ethers are preferred; propylene glycol monomethyl ether is more preferred.

When a solvent is used, the content thereof is an amount that sets the solids concentration of the primer composition to from 1 to 50 wt%, and preferably from 5 to 30 wt%. Outside of this range, defects may arise in the film obtained by curing the composition. That is, at concentrations below the above range, sagging, wrinkling and blotchiness tend to arise, and the desired hardness and abrasion resistance may not be achievable. At concentrations greater than the above range, blushing, clouding and cracking of the film tend to arise.

### [Other Ingredients]

Where necessary, an inorganic particle (B) dispersant and other ingredients may be added to the primer composition within ranges that do not compromise the advantageous effects of the invention.

Exemplary dispersants include cationic surfactants, anionic surfactants, nonionic surfactants, and various silane compounds or siloxane compounds having reactivity with the particle surfaces, such as silane coupling agents.

The primer composition sometimes absorbs moisture during storage or use, resulting in the hydrolysis of alkoxysilyl groups within the vinyl (co)polymer (A) and thus undergoing a decrease in shelf stability. A dehydrating agent may be added in order to prevent this.

o-Carboxylic acid esters such as methyl o-formate, ethyl o-formate and ethyl o-acetate, dialkylcarbodiimides such as dicyclohexylcarbodiimide, and solid adsorbents such as silica gel and molecular sieve may be used as dehydrating agents.

Where necessary, leveling agents, metal powders, antioxidants, infrared reflecting/absorbing property-imparting agents, flexibility-imparting agents, antistatic agents, antifouling agents and water repellency-imparting agents may be added to the primer composition of the invention within ranges that do not compromise the advantageous effects of the invention.

The primer composition, from the standpoint of the shelf stability, has a liquid pH which is preferably from 2 to 8, and more preferably from 3 to 6. At a pH outside of this range, the storage properties may decrease.

Although there is no particular limitation on the method for adjusting the pH, adjustment within the above range is also possible by adding a pH adjustor. When the pH of the primer composition falls outside of the above range, on the acidic side of this range, the pH may be adjusted by adding a basic compound such as ammonia or ethylenediamine; on the basic side, the pH may be adjusted using an acidic compound such as hydrochloric acid, nitric acid, acetic acid or citric acid.

The primer composition used in this invention can be obtained by mixing together the above ingredients the usual manner.

By applying the resulting primer composition onto a resin substrate and curing it, a primer layer can be formed.

Methods for applying the primer composition include various coating methods such as brush coating, spraying, dipping, flow coating, roll coating, curtain coating, spin coating and knife coating.

The method of curing the primer composition after it has been applied may involve air-drying the applied composition by letting it stand in air, or heating the applied composition. No particular limitation is imposed on the curing temperature and time, although heating for a period of from 10 minutes to 2 hours at or below the heat-resistance temperature of the substrate is preferred; heating at between 80°C and 135°C for a period of from 30 minutes to 2 hours is more preferred.

In order for the film to possess satisfactory hardness and abrasion resistance, have stable, long-term adhesion and be free of cracking, the primer layer must have a thickness of from 1 to 20 µm, preferably from 3 to 15 µm, and more preferably at least 5 µm and up to 10 µm. At a film thickness below 1 µm, the ultraviolet-shielding ability is inadequate and peeling, etc. of the film arises; at a film thickness greater than 20 µm, cracks arise in the film.

### <Hardcoat Layer>

The coated article of the invention has a hardcoat layer formed on the primer layer.

The hardcoat layer in the coated article of the invention is a cured film of a silicone composition containing components (a) to (c) below:
(a) a silicone resin obtained by (co)hydrolytically condensing at least one compound selected from alkoxysilanes of general formula (1) below

   R¹ₘSi(OR²)₄₋ₘ (1)

   (wherein each R¹ is independently a hydrogen atom or a substituted or unsubstituted monovalent hydrocarbon group, each R² is independently an alkyl group of 1 to 3 carbon atoms, and m is 0, 1 or 2) and (partial) hydrolytic condensates thereof,
(b) colloidal silica, and
(c) an ultraviolet absorber.

### [Component (a)]

Component (a) is a silicone resin obtained by the (co)hydrolytic condensation of at least one compound selected from alkoxysilanes of general formula (1) below and (partial) hydrolytic condensates thereof.

R¹ₘSi(OR²)₄₋ₘ (1)

In the above formula, each R¹ is independently a hydrogen atom or a substituted or unsubstituted monovalent hydrocarbon group of 1 to 12 carbon atoms and a plurality of R¹ may mutually bond to form a linked group, each R² is independently an alkyl group of 1 to 3 carbon atoms, and m is 0, 1 or 2.

The monovalent hydrocarbon group of R¹ is an alkyl group of 1 to 12 carbon atoms, preferably 1 to 8 carbon atoms, and more preferably 1 to 6 carbon atoms, which may be linear, branched or cyclic; a cycloalkyl group of 3 to 12 carbon atoms, preferably 3 to 8 carbon atoms, and more preferably 3 to 6 carbon atoms; an alkenyl group of 2 to 12 carbon atoms, preferably 2 to 8 carbon atoms, and more preferably 2 to 6 carbon atoms; or an aryl group of 6 to 12 carbon atoms, preferably 6 to 8 carbon atoms.

Specific examples of the monovalent hydrocarbon group of R¹ include alkyl groups such as methyl, ethyl, propyl, butyl, pentyl, hexyl, heptyl and octyl groups; cycloalkyl groups such as cyclopentyl and cyclohexyl groups; alkenyl groups such as vinyl and allyl groups; and aryl groups such as the phenyl group.

Some or all hydrogen atoms on these groups may be substituted with other substituents. Specific examples include halogen-substituted hydrocarbon groups such as chloromethyl, γ-chloropropyl and 3,3,3-trifluoropropyl groups; and (meth)acryloxy, epoxy, mercapto, amino and isocyanato group-substituted hydrocarbon groups such as γ-(meth)acryloxypropyl, γ-glycidoxypropyl, 3,4-epoxycyclohexylethyl, γ-mercaptopropyl, γ-aminopropyl and γ-isocyanatopropyl groups. Additional examples include isocyanurate groups in which a plurality of isocyanato group-substituted hydrocarbon groups are bonded to each other.

Of these, when used in applications requiring abrasion resistance and weather resistance, alkyl groups are preferred; when toughness and dyeability are required, epoxy, (meth)acryloxy and isocyanurate-substituted hydrocarbon groups are preferred.

Examples of the alkyl group of 1 to 3 carbon atoms of R² include methyl, ethyl, n-propyl and isopropyl groups. Of these, taking into account, for example, the high hydrolytic condensation reactivity and the high vapor pressure and ease of distillation of the alcohol R²OH that forms, methyl groups and ethyl groups are preferred.

When m = 0 in above formula (1), specific examples of (a-0) tetraalkoxysilanes represented by the general formula Si(OR²)₄ and partial hydrolytic condensates thereof include tetramethoxysilane, tetraethoxysilane, tetraisopropoxysilane, tetrabutoxysilane and partial hydrolytic condensates of tetramethoxysilane (available under the trade name "M Silicate 51" from Tama Chemicals Co., Ltd, the trade name "MSI51" from Colcoat Co., Ltd., and the trade names "MS51" and "MS56" from Mitsubishi Chemical Corporation), partial hydrolytic condensates of tetraethoxysilane (available under the trade names "Silicate 35" and "Silicate 45" from Tama Chemicals Co., Ltd., and the trade names "ESI40" and "ESI48" from Colcoat Co., Ltd.) and partial hydrolytic condensates of tetramethoxysilane and tetraethoxysilane (available under the trade name "FR-3" from Tama Chemicals Co., Ltd. and the trade name "EMSi48" from Colcoat Co., Ltd.).

When m = 1 in above formula (1), specific examples of (a-1) trialkoxysilanes represented by the general formula R¹Si(OR²)₃ and partial hydrolytic condensates thereof include hydrogentrimethoxysilane, hydrogentriethoxysilane, methyltrimethoxysilane, methyltriethoxysilane, methyltriisopropoxysilane, ethyltrimethoxysilane, ethyltriethoxysilane, ethyltriisopropoxysilane, propyltrimethoxysilane, propyltriethoxysilane, propyltriisopropoxysilane, phenyltrimethoxysilane, vinyltrimethoxysilane, allyltrimethoxysilane, γ-methacryloxypropyltrimethoxysilane, γ-methacryloxypropyltriethoxysilane, γ-acryloxypropyltrimethoxysilane, γ-acryloxypropyltriethoxysilane, γ-glycidoxypropyltrimethoxysilane, γ-glycidoxypropyltriethoxysilane, β-(3,4-epoxycyclohexyl)ethyltrimethoxysilane, γ-chloropropyltrimethoxysilane, 3,3,3-trifluoropropyltrimethoxysilane, 3,3,3-trifluoropropyltriethoxysilane, perfluorooctylethyltrimethoxysilane, γ-mercaptopropyltrimethoxysilane, γ-aminopropyltrimethoxysilane, γ-aminopropyltriethoxysilane, N-(2-aminoethyl)aminopropyltrimethoxysilane, γ-isocyanatopropyltrimethoxysilane, γ-isocyanatopropyltriethoxysilane, tris(3-trimethoxysilylpropyl)isocyanurate and tris(3-triethoxysilylpropyl)isocyanurate in which the isocyanate groups are mutually bonded, partial hydrolytic condensates of methyltrimethoxysilane (available under the trade names "KC-89S" and "X-40-9220" from Shin-Etsu Chemical Co., Ltd.), and partial hydrolytic condensates of methyltrimethoxysilane and γ-glycidoxypropyltrimethoxysilane (available under the trade name"X-41-1056" from Shin-Etsu Chemical Co., Ltd.).

When m = 2 in above formula (1), specific examples of (a-2) dialkoxysilanes represented by the general formula R¹₂Si(OR²)₂ and partial hydrolytic condensates thereof include methylhydrogendimethoxysilane, methylhydrogendiethoxysilane, dimethyldimethoxysilane, dimethyldiethoxysilane, methylethyldimethoxysilane, diethyldimethoxysilane, diethyldiethoxysilane, methylpropyldimethoxysilane, methylpropyldiethoxysilane, diisopropyldimethoxysilane, phenylmethyldimethoxysilane, vinylmethyldimethoxysilane, γ-glycidoxypropylmethyldimethoxysilane, γ-glycidoxypropylmethyldiethoxysilane, β-(3,4-epoxycyclohexyl)ethylmethyldimethoxysilane, γ-methacryloxypropylmethyldimethoxysilane, γ-methacryloxypropylmethyldiethoxysilane, γ-mercaptopropylmethyldimethoxysilane, γ-aminopropylmethyldiethoxysilane and N-(2-aminoethyl)aminopropylmethyldimethoxysilane.

Although the silicone resin of component (a) may be prepared using above components (a-0), (a-1) and (a-2) in any ratio, to further enhance the shelf stability, abrasion resistance and cracking resistance, these components are preferably used in ratios such that the number of silicon atoms from (a-0) is from 0 to 50%, the number of silicon atoms from (a-1) is from 50 to 100% and the number of silicon atoms from (a-2) is from 0 to 50% of the total number of silicon atoms in components (a-0), (a-1) and (a-2); and are more preferably used in ratios such that the number of silicon atoms from (a-0) is from 0 to 30%, the number of silicon atoms from (a-1) is from 70 to 100% and the number of silicon atoms from (a-2) is from 0 to 30%. When the number of silicon atoms from the main ingredient (a-1) is 50% or more of the total number of silicon atoms, the curability is good and the cured film has a suitable hardness.

During production of the silicone resin of component (a), components (a-0), (a-1) and (a-2) may be (co)hydrolytically condensed by a known method. For example, the silicone resin can be obtained by (co)hydrolytically condensing, either individually or as a mixture, the alkoxysilanes of components (a-0), (a-1) and (a-2) or their (partial) hydrolytic condensates in water at a pH of from 1 to 7.5, preferably from 2 to 7. At this time, a dispersion of metal oxide nanoparticles such as a silica sol in water may be used. To adjust the pH in this range and promote hydrolysis, an inorganic acid or organic acid such as hydrofluoric acid, hydrochloric acid, nitric acid, formic acid, acetic acid, propionic acid, oxalic acid, citric acid, maleic acid, benzoic acid, malonic acid, glutaric acid, glycolic acid, methanesulfonic acid or toluenesulfonic acid; a solid acid catalyst such as a cation exchange resin having carboxylic acid groups or sulfonic acid groups on the surface; or water-dispersed metal oxide nanoparticles such as an acidic water-dispersed silica sol may be used as the catalyst. Alternatively, hydrolysis may be carried out in the presence of a dispersion of metal oxide nanoparticles in water or an organic solvent, such as a silica sol.

The amount of water used in the hydrolysis step is preferably from 20 to 3,000 parts by weight per 100 parts by weight of components (a-0), (a-1) and (a-2) combined. The use of excess water lowers the equipment efficiency; moreover, when the ultimate composition is obtained, excess water may also trigger decreases in the coating properties and the drying characteristics due to the influence of residual water. To enhance the shelf stability, abrasion resistance and cracking resistance, the amount of water used is preferably at least 50 parts by weight but less than 150 parts by weight.

In the hydrolysis step, water may be added dropwise or poured into the alkoxysilane or a (partial) hydrolytic condensate thereof or, conversely, the alkoxysilane or a (partial) hydrolytic condensate thereof may be added dropwise or poured into water. In this case, the reaction solvent may include an organic solvent, although it preferably does not include an organic solvent. The reason is that the molecular weight of the silicone resin obtained tends to become smaller as more organic solvent is included.

The condensation step may be carried out successively without interruption following the hydrolysis step, and is typically carried out at a liquid temperature that is normal room temperature or under heating at up to 100°C. At a temperature higher than 100°C, gelation may occur. At 80°C or above, condensation can be promoted by distilling off, at normal pressure or under reduced pressure, the alcohol that has formed due to hydrolysis. A condensation catalyst such as a basic compound, an acidic compound or a metal chelate compound may be added for the purpose of promoting condensation.

Before or during the condensation step, an organic solvent may be added or a dispersion of metal oxide nanoparticles in water or an organic solvent, such as a silica sol, may be added for the purpose of adjusting the degree to which condensation proceeds and the concentration. Generally, as condensation proceeds, the molecular weight of the silicone resin rises and its solubility in water or the formed alcohol decreases. Therefore, it is preferable for the organic solvent that is added to be one which dissolves the silicone resin well, boils at 80°C or above and has a relatively high polarity.

Specific examples of such organic solvents include alcohols such as isopropyl alcohol, n-butanol, isobutanol, t-butanol, cyclohexanol and diacetone alcohol; ketones such as methyl propyl ketone, methyl ethyl ketone, diethyl ketone, methyl isobutyl ketone, cyclohexanone and diacetone alcohol; ethers such as dipropyl ether, dibutyl ether, anisole, dioxane, ethylene glycol monoethyl ether, ethylene glycol monobutyl ether, propylene glycol monomethyl ether and propylene glycol monomethyl ether acetate; and esters such as propyl acetate, butyl acetate and cyclohexyl acetate.

The resulting silicone resin has a polystyrene-equivalent weight-average molecular weight, as determined by GPC analysis, that is preferably from 1,500 to 50,000, and more preferably from 2,000 to 20,000. At a molecular weight of 1,500 or more, the film has an excellent toughness and crack formation can be suppressed; at a molecular weight up to 50,000, excessively low hardness and film clouding due to phase separation of the resin within the film can be suppressed.

### [Component (b)]

Component (b) is colloidal silica. The colloidal silica of component (b) is preferably in the form of silica that is colloidally dispersed in a water or organic solvent medium; a commercially available aqueous dispersion or organic dispersion-type product may be used.

Specific examples include Snowtex O, OS, O40, OL, methanol silica sol, IPA-ST, IBA-ST, PMA-ST and MEK-ST from Nissan Chemical Industries, Ltd.

Silica having a median diameter, as measured by the dynamic light scattering method, of 5 to 50 nm is preferred from the standpoint of the transparency and hardness of the resulting hardcoat layer.

The colloidal silica content, expressed in terms of the solids per 100 parts by weight of component (a), is preferably from 3 to 100 parts by weight, more preferably from 6 to 50 parts by weight, and even more preferably from 10 to 30 parts by weight.

### [Component (c)]

Component (c) is an ultraviolet absorber. The ultraviolet absorber of component (c) is exemplified by benzophenone derivatives, benzotriazole derivatives, cyanoacrylate derivatives and triazine derivatives.

Specific examples include 2,4-dihydroxybenzophenone, 2,2',4,4'-tetrahydroxybenzophenone, 2-hydroxy-4-methoxybenzophenone, 2-hydroxy-4-methoxybenzophenone-5-sulfonic acid, 2-hydroxy-4-n-octoxybenzophenone, 2-hydroxy-4-n-dodecyloxybenzophenone, 2-hydroxy-4-n-benzyloxybenzophenone, 2,2'-dihydroxy-4,4'-dimethoxybenzophenone, 2,2'-dihydroxy-4,4'-diethoxybenzophenone, 2,2'-dihydroxy-4,4'-dipropoxybenzophenone, 2,2'-dihydroxy-4,4'-dibutoxybenzophenone, 2,2'-dihydroxy-4-methoxy-4'-propoxybenzophenone, 2,2'-dihydroxy-4-methoxy-4'-butoxybenzophenone and 2,3,4-trihydroxybenzophenone; 2-(2-hydroxy-5-t-methylphenyl)benzotriazole, 2-(2-hydroxy-5-t-octylphenyl)benzotriazole and 2-(2-hydroxy-3,5-di-t-butylphenyl)benzotriazole; and (2-(4,6-diphenyl-1,3,5-triazine-2-yl)-5-(hexyloxy)phenol, Tinuvin 400 (BASF), Tinuvin 405 (BASF), Tinuvin 460 (BASF), Tinuvin 477 (BASF), Tinuvin 479 (BASF), Tinuvin 1577ED (BASF) and Tinuvin 1600 (BASF). In addition, a silane coupling agent-type reactive ultraviolet absorber in which some of the compound has been substituted with alkoxysilyl groups may be used.

Of these, a silane coupling agent-type reactive ultraviolet absorber in which some of the above compound has been substituted with alkoxysilyl groups is preferred. By using the above reactive ultraviolet absorber, ultraviolet absorbing groups are fixed within the hardcoat layer, suppressing bleedout of the ultraviolet absorber over time, which is effective for suppressing clouding and cracks.

The above reactive ultraviolet absorber is preferably a benzophenone derivative of general formula (2) below which has at least one alkoxysilyl group.

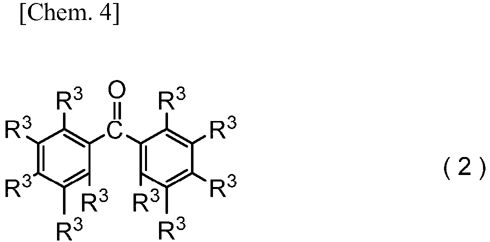

In the formula, each R³ is independently a hydrogen atom, a hydroxyl group, an alkyl group of 1 to 5 carbon atoms, or a group of general formula (3) below, and at least one occurrence of R³ is a group of general formula (3) below:

*-O-(CH₂)ⱼ-SiR⁴ₖ(OR⁵)₃₋ₖ (3)

(wherein R⁴ and R⁵ are each independently an alkyl group of 1 to 5 carbon atoms, j is an integer from 1 to 8, k is an integer from 0 to 2, and an asterisk * denotes a bond with a neighboring atom).

In formula (2) above, the alkyl group of R³ may be a linear or branched alkyl group of 1 to 5 carbon atoms, preferably 1 to 3 carbon atoms. Specific examples include methyl, ethyl, n-propyl, isopropyl, n-butyl, isobutyl, sec-butyl, t-butyl, n-pentyl and isopentyl groups.

At least one occurrence of R³ is a group of general formula (3) above. By having the group of general formula (3), the ultraviolet absorber is fixed within the hardcoat layer, suppressing bleedout over time, which is effective for suppressing clouding and cracking of the hardcoat layer.

Having at least one occurrence of R³ be a hydroxyl group is preferable because the ultraviolet absorption is better. Among the occurrences of R³, aside from groups of general formula (3) and hydroxyl groups, hydrogen atoms are preferred.

In formula (3), the alkyl groups of 1 to 5 carbon atoms represented by R⁴ and R⁵ preferably have 1 to 3 carbon atoms. Specific examples of each include the same groups as mentioned above for R³. Of these, methyl and ethyl groups are preferred for R⁴. As for R⁵, taking into account the high hydrolytic condensation reactivity and the high vapor pressure and ease of distilling off the formed alcohol R⁵OH, methyl and ethyl groups are preferred.

The subscript 'j' is an integer from 1 to 8. From the standpoint of the availability of the starting material, an integer from 1 to 3 is preferred, and 3 is more preferred.

The subscript 'k' is an integer from 0 to 2. It is especially preferable for k to be 0 because the hydrolytic condensation reactivity is high and the abrasion resistance of the film increases.

Of the benzophenone derivatives represented by general formula (2) above, 2-hydroxy-4-trimethoxysilylpropoxybenzophenone is preferred.

The component (c) content per 100 parts by weight of component (a) is preferably from 0.1 to 10 parts by weight, and more preferably from 0.2 to 5 parts by weight.

### [Curing Catalyst]

The silicone composition preferably includes a curing catalyst which promotes condensation reactions by condensable groups, such as silanol groups and alkoxy groups, that are included in the silicone resin (a).

Specific examples of the curing catalyst include basic compounds such as lithium hydroxide, sodium hydroxide, potassium hydroxide, sodium methylate, sodium propionate, potassium propionate, sodium acetate, potassium acetate, sodium formate, potassium formate, trimethylbenzylammonium hydroxide, tetramethylammonium hydroxide, tetraethylammonium hydroxide, tetrapropylammonium hydroxide, tetrabutylammonium hydroxide, tetramethylammonium acetate, n-hexylamine, tributylamine, diazabicycloundecene (DBU) and dicyandiamide; metal-containing compounds such as tetraisopropyl titanate, tetrabutyl titanate, titanium acetylacetonate, aluminum triisobutoxide, aluminum triisopropoxide, tris(acetylacetonate) aluminum, diisopropoxy(ethylacetoacetate) aluminum, aluminum perchlorate, aluminum chloride, cobalt octylate, cobalt acetylacetonate, iron acetylacetonate, tin acetylacetonate, dibutyltin octylate and dibutyltin laurate; and acidic compounds such as p-toluenesulfonic acid and trichloroacetic acid. Of these, sodium propionate, sodium acetate, sodium formate, trimethylbenzylammonium hydroxide, tetramethylammonium hydroxide, tetraethylammonium hydroxide, tetrapropylammonium hydroxide, tetrabutylammonium hydroxide, tris(acetylacetonate) aluminum and diisopropoxy(ethylacetoacetate) aluminum are especially preferred.

When a curing catalyst is used, the content thereof is not particularly limited so long as it is an effective amount for curing the silicone resin of component (a), although it is preferably from 0.0001 to 1 wt%, and more preferably from 0.0005 to 0.1 wt%, based on the silicone resin solids. At 0.0001 wt% or more, curing is adequate; at up to 1 wt%, the formation of cracks in the film and decreased water resistance can be suppressed.

### [Solvent]

A solvent is preferably included in the silicone composition. The solvent is exemplified by the same solvents as those used in the primer composition. When a solvent is used, the content thereof is an amount which sets the solids concentration of the silicone composition to preferably from 5 to 40 wt%, and more preferably from 10 to 35 wt%.

### [Other Ingredients]

Where necessary, pH adjustors, leveling agents, thickeners, pigments, dyes, metal oxide particles other than silica, metal powders, antioxidants, ultraviolet stabilizers, infrared reflecting/absorbing property-imparting agents, flexibility-imparting agents, antistatic agents, antifouling agents and water repellency-imparting agents may be added to the above silicone composition within ranges that do not compromise the advantageous effects of the invention.

The silicone composition used in this invention can be obtained by mixing together the above ingredients in the usual manner.

By applying onto the primer layer and curing the resulting silicone composition, a hardcoat layer can be formed.

The method for applying the silicone composition is exemplified by the same methods as those mentioned above as examples for the primer composition.

The curing method following application of the silicone composition may involve curing by letting the composition stand in air and air-drying, or by heating. The curing temperature and curing time are not particularly limited. For example, heating for a period of from 10 minutes to 2 hours at or below the heat-resistance temperature of the substrate is preferred; heating for a period of from 30 minutes to 2 hours at between 80°C and 135°C is more preferred.

The thickness of the resulting silicone hardcoat layer is not particularly limited. However, to obtain a good film hardness and abrasion resistance, stable, long-term adhesion and the absence of cracks, the film thickness must be from 1 to 15 µm, and is preferably from 3 to 13 µm, and more preferably from 5 to 10 µm. At a film thickness of less than 1 µm, the ultraviolet-shielding ability is inadequate, peeling, etc. of the film arises, and the film hardness and abrasion resistance are inadequate. At a film thickness greater than 15 µm, cracks arise in the film.

### [Hardness of Hardcoat Layer]

The hardcoat layer has a surface hardness, as measured by the nanoindentation method, of preferably from 0.10 to 0.50 GPa, more preferably from 0.20 to 0.40 GPa, and even more preferably from 0.25 to 0.35 GPa. Instruments for measuring the elastic modulus of such films include nanoindenters (the Hysitron Triboindenter, from Bruker Japan KK; and the ENT-NEXUS, from Elionix, Inc.).

A surface hardness of 0.10 GPa or more is desirable because the abrasion resistance when the photomodified layer is formed is good. A surface hardness of up to 0.50 GPa is desirable because the stress incurred by the photomodified layer from the resin substrate during a heat resistance test or weathering test can be effectively relaxed by the siloxane hardcoat layer, as a result of which the crack resistance improves and the film achieves a good heat resistance and weather resistance.

In this invention, the above hardness is a value obtained using specialized software to analyze the data generated by a nanoindenter (ENT-NEXUS, from Elionix, Ltd.) when a Berkovitch indenter is pressed into the surface of the siloxane hardcoat layer under a pressing load of 0.5 mN within a room temperature (23°C) environment.

### <Photomodified Layer>

The coated article of the invention has a photomodified layer formed on a surface-layer portion of the hardcoat layer.

The photomodified layer in the coated article of the invention is preferably a hard thin-film layer composed primarily of silicon dioxide that is obtained by irradiating the surface of the hardcoat layer with light having a wavelength of 300 nm or less.

It is known that the energy possessed by light having a short wavelength of 300 nm or less, by breaking the bond chains of organic polymers, sequentially and selectively cleaving the C-H, Si-C and Si-O-Si bonds which make up the pendant functional groups in the hardcoat layer formed on the substrate and causing these cleaved oxygen atoms and silicon atoms to recombine, is able to modify part of the hardcoat layer into a hard thin-film layer composed primarily of silicon dioxide.

Exemplary sources of vacuum ultraviolet light having short wavelengths of 300 nm or less include excimer lasers, excimer lamps and low-pressure mercury vapor lamps. Examples of excimer lasers include Ar₂ lasers having a wavelength of 126 nm, F₂ lasers having a wavelength of 157 nm, ArF excimer lasers having a wavelength of 193 nm, KrF excimer lasers having a wavelength of 248 nm and XeCl excimer lasers having a wavelength of 307 nm. Of these, preferred sources of vacuum ultraviolet light of 300 nm or less include Ar₂ lasers, F₂ lasers, ArF lasers and KrF excimer lasers. Existing excimer lamps include those with wavelengths of 126 nm (Ar₂), 146 nm (Kr₂), 165 nm (ArBr), 172 nm (Xe₂), 175 nm (ArCl). 193 nm (ArF), 207 nm (KrBr), 222 nm (Kr Cl), 253 nm (XeCl), 283 nm (XeBr) and 308 nm (XeCl). In this invention, the use of a F₂ laser or a Xe excimer lamp is preferred.

The method of ultraviolet irradiation is not particularly limited, although one exemplary method involves irradiating the hardcoat layer with ultraviolet light having a wavelength of 300 nm or less using the above light source in open air or in a nitrogen, argon or other inert gas environment. The cumulative light dose is preferably at least 0.1 J/cm², and more preferably at least 0.5 J/cm².

The film thickness of the photomodified layer is preferably from 0.1 to 1.0 µm, more preferably from 0.2 to 0.8 µm, and even more preferably from 0.3 to 0.6 µm. A film thickness of 0.1 µm or more is desirable because the resulting abrasion resistance is good. A film thickness of up to 1.0 µm is desirable because the resulting heat resistance and weather resistance are good.

### <Other Layers>

The coated article of the invention may additionally have, on the above photomodified layer, such layers as an ultraviolet absorption layer, a printed layer, a recording layer, an infrared-shielding layer, a pressure-sensitive adhesive layer and an inorganic vapor-deposited layer.

One characteristic of the coated article of the invention is the visible-light transmittance of the film. This can be evaluated in terms of the haze value of the film. Because the haze becomes larger at a greater film thickness, in this invention the haze at a film thickness of 20 µm or less is preferably 2.0 or less, more preferably 1.5 or less, and even more preferably 1.0 or less. The haze of the film can be measured with, for example, the NDH 2000 (Nippon Denshoku Industries Co., Ltd.) haze meter.

Another characteristic of the coated article of the invention is good adhesion between the film and the substrate. This can be evaluated by means of a crosscut peel test in accordance with JIS K5400. Six lengthwise and six crosswise slits are made in the film at 2 mm intervals with a razor blade, creating 25 squares. Cellotape^{®} (Nichiban Co., Ltd.) is then firmly attached to the scored film, following which the tape is rapidly peeled off toward oneself at 90°. The closer the number of remaining squares (X) where the film does not peel off is to 25, the better the adhesion, which is indicated as X/25. By boiling the cured film in 100°C water for 2 hours and then carrying out the same crosscut peel test, the result can be used as an indicator of the water-resistant adhesion.

Yet another characteristic of the coated article of the invention is excellent abrasion resistance. The abrasion resistance can be evaluated using, as the indicator, the difference in haze (ΔHz) before and after the Taber abrasion test. In accordance with ASTM 1044, when a CS-10F abrasion wheel is mounted on a Taber abrasion tester, the haze after 500 rotations under a load of 500 gf is measured and ΔHz (% points) is determined as (haze after test, %) - (haze before test, %), the haze difference ΔHz at a film thickness of 20 µm or less is preferably 10 points or less, more preferably 5 points or less, and still more preferably 2 points or less. In the field in question, at a haze difference ΔHz in this test of 2 points or less, the test specimen is generally judged to have an abrasion resistance equal to or better than that of glass.

Still another characteristic of the coated article of the invention is good heat resistance. One exemplary heat resistance test involves holding a test specimen in a 110°C oven for a period of from 100 to 1,000 hours and examining the appearance of the specimen every 100 hours. The coated article of the invention preferably shows no cracking or peeling of the film even after 200 hours of testing, more preferably shows no cracking or peeling even after 500 hours of testing, and most preferably shows no cracking or peeling even after 1,000 hours of testing.

A further characteristic of the coated article of the invention is good weather resistance. This can be determined based on changes in the film appearance in a film weathering test. In one exemplary weathering test, the Isobar UV Tester W-151 from Iwasaki Electric Co., Ltd. is used to subject a test specimen to 12-hour cycles, each cycle consisting of 4 hours of ultraviolet irradiation (irradiation intensity, 90 mW/cm²; black panel temperature, 63°C; 70% humidity), 4 hours of darkness (black panel temperature, 63°C; 90% humidity) and 4 hours of condensation (black panel temperature, 30°C; 95% humidity), and evaluation can be carried out by examining the state of the test specimen every 10 cycles (120 hours). Evaluation may be carried out by observation with the unaided eye or using a microscope. The microscope used for this purpose is not particularly limited. For example, the VK-8710 laser microscope available from Keyence Corporation may be used.

In the above weathering test, it is preferable for no cracking or peeling to arise even after 360 hours of testing, more preferable for no cracking or peeling to arise even after 480 hours of testing, and still more preferable for no cracking or peeling to arise even after 600 hours of testing.

Also, in the above weathering test, one-third of the testing time is a light irradiation test, the intensity of which is 900 W/m². The cumulative energy when ultraviolet light having an intensity of 900 W/m² is irradiated for one hour is 0.9 kWh/m². Following the rules for converting derived units, this is equal to 3.24 MJ (megajoules). Therefore, the cumulative irradiance after 600 hours of the above SUV test is 600 (testing time) × 1/3 (ratio of light irradiation test) × 3.24 MJ/m²·h ≈ 648 MJ/m².

Although the testing conditions and environment for the weathering test in this invention may be set in any way, correlations between the testing conditions and outdoor exposure can be easily estimated. For example, using a UV illuminometer (Eye UV illuminometer UVP365-1, from Iwasaki Electric Co., Ltd.) to measure the amount of outdoor ultraviolet light, one finds this to be 1×101 W/m² (when measured in fair weather at noon on the day of the vernal equinox in Matsuida-machi, Annaka-shi, Gunma Prefecture, Japan). Given that the average number of hours of sunshine per year in Japan is about 2,000 hours, the cumulative irradiance over one year in Japan can be roughly calculated to be 2,000 h/yr × 1 year × 10 W/m² = 20 kWh/m² ≈ 72 MJ/m². Therefore, from the formula below, the cumulative irradiance after the above SUV test of 600 hours corresponds to the cumulative irradiance incurred by the sample when used outdoors in Japan for about 9 years. 648 MJ/m2 (cumulative irradiance after 600 hour test)/72 MJ/m2·yr (annual light irradiance in Japan) ≈ 9 years The outdoor environment varies depending on the latitude and climate, and so the testing conditions should be suitably modified according to the usage environment of the cured film.

### EXAMPLES

Synthesis Examples, Examples and Comparative Examples are given below by way of illustration, although the invention is not limited by these Examples. In the Examples below, "%" refers to percent by weight, "parts" refers to parts by weight, and "Me" stands for a methyl group. The weight-average molecular weight is measured by gel permeation chromatography (GPC) relative to a polystyrene standard.

### [1] Synthesis of Vinyl Copolymer (A-1)

### [Synthesis Example 1]

### <Synthesis of Ultraviolet-Absorbing Group and Alkoxysilyl Group-Containing Vinyl Copolymer (A-1-1)>

A 2-liter flask equipped with a stirrer, a condenser and a thermometer was charged with 126 g of isobutyl acetate and 126 g of isopropyl alcohol as the solvents and heated to 80°C under a stream of nitrogen. To this was added dropwise, over 1.5 hours and at between 80°C and 90°C, an already prepared monomer mixture solution (obtained by mixing together 90 g of γ-methacryloxypropyltrimethoxysilane, 270 g of methyl methacrylate, 22.5 g of glycidyl methacrylate, 67.5 g of RUVA-1 as an ultraviolet-absorbing group (2-[2'-hydroxy-5'-(2-methacryloxyethyl)phenyl]-2H-benzotriazole (RUVA-93, from Otsuka Chemical Co., Ltd.)) and 1 g of 2,2'-azobis(2-methylbutyronitrile) as a polymerization initiator), and the flask contents were stirred for 5 hours at between 80°C and 90°C. The system was then left to cool and 367 g of diacetone alcohol was poured in, stopping the reaction.

The resulting ultraviolet-absorbing group and alkoxysilyl group-containing vinyl copolymer (A-1-1) had an ultraviolet-absorbing group content of 10.2 wt%, a trimethoxysilyl group content of 10.2 wt% and a weight-average molecular weight of 87,800.

### [Synthesis Example 2]

### <Synthesis of Alkoxysilyl Group-Containing Vinyl Copolymer (A-1-2)>

Aside from changing the formulation to that shown in Table 1, the same procedure was carried out as in Synthesis Example 1, giving an alkoxysilyl group-containing vinyl copolymer (A-1-2). The trimethoxysilyl group content in the resulting copolymer was 9.4 wt%, and the weight-average molecular weight was 60,800.

**[Table 1]**

| Synthesis Example | | 1 | 2 |
|---|---|---|---|
| Alkoxysilyl group-containing vinyl copolymer | | A-1-1 | A-1-2 |
| Formulation (pbw) | MPTMS | 90 | 50 |
| | RUVA-1 | 67.5 | 0 |
| | MMA | 270 | 190 |
| | GMA | 22.5 | 18 |

### Note:

| | |
|---|---|
| MPTMS: | γ-Methacryloxypropyltrimethoxysilane |
| RUVA-1: | 2-[2'-Hydroxy-5'-(2-methacryloxyethyl)phenyl]-2H-benzotriazole (RUVA-93, from Otsuka Chemical Co., Ltd.) |
| MMA: | Methyl methacrylate |
| GMA: | Glycidyl methacrylate |

### Synthesis of Ultraviolet Absorber

### [Synthesis Example 3]

### <Synthesis of Reactive Ultraviolet Absorber (c-1)>

[2] 4-Allyloxy-2-hydroxybenzophenone (Aldrich Co.) in an amount of 25.4 g (0.1 mol) was suspended in 70 mL of toluene within a reactor. To this was added 0.05 g of the platinum catalyst PL50-T (Shin-Etsu Chemical Co., Ltd.), the temperature was raised to 65°C, and 29.3 g (0.24 mole) of trimethoxysilane was added. After 2 hours of stirring at 80°C, the reaction mixture was cooled and 5 g of Wakogel C-100 was added, adsorbing the platinum catalyst, following which filtration was carried out. The solvent was removed by vacuum concentration, giving 34.8 g (0.092 mol) of a red oily product.

The ¹H-NMR spectrum of the main ingredient agreed with the structure of 2-hydroxy-4-trimethoxysilylpropoxybenzophenone. The resulting product is abbreviated here as reactive ultraviolet absorber (c-1).

### [3] Preparation of Silicone Compositions

### [Synthesis Example 4]

### <Preparation of Silicone Composition (HC-1)>

A 500-mL flask equipped with a stirrer, a condenser and a thermometer was charged with 48 g of methyltrimethoxysilane, 1.2 g of the reactive ultraviolet absorber (c-1) obtained in Synthesis Example 3 was added, and the mixture was maintained at 20°C while stirring. To this were added 29.4 g of a water-dispersed colloidal silica (Snowtex O, from Nissan Chemical Industries, Ltd.; average particle size, 15 to 20 nm; product containing 20% SiO₂), 8.2 g of acetic acid and 30 g of water, and the mixture was stirred.

After 3 hours of stirring at 60°C, 45 g of n-butanol was added and the methanol that formed as a by-product and some of the water, in a combined amount of 72 g, were removed by distillation at normal pressure. Isopropanol was then added to a solids concentration of 30 wt%, giving a diluted solution.

Next, 0.02 g of the polyether-modified silicone KP-341 (Shin-Etsu Chemical Co., Ltd.) as a leveling agent was added to 30 g of the above solution, 0.1 g of a 10 wt% aqueous solution of tetrabutylammonium hydroxide was added as the curing catalyst, and the mixture was stirred at room temperature for 1 hour. Precipitate was removed by filtering the resulting solution with filter paper, giving a silicone composition (HC-1).

### [Comparative Synthesis Example 1]

### <Preparation of Silicone Composition Containing No Ultraviolet Absorber (HC-2)>

Aside from not adding a reactive ultraviolet absorber (c-1), the same procedure was carried out as in Synthesis Example 4, giving a silicone composition containing no ultraviolet absorber (HC-2).

### [4] Preparation of Primer Compositions

### [Preparation Examples 1 to 8, Comparative Preparation Examples 1 to 6]

Primer compositions were obtained by adding the following ingredients to the compositions prepared in the usual manner according to the formulations shown in Tables 2 and 3 (amounts are shown in parts by weight, solids basis) and adjusting their concentrations: the dehydrating agent ethyl o-formate (F-1) in an amount representing 5 wt% of the composition, the leveling agent LE-604 (G-1) in an amount representing 500 ppm by weight of the composition, and propylene glycol monomethyl ether (E-1) in an amount that brings the total solids concentration to 20 wt%.

Of the abbreviations used in the Preparation Examples, Examples and Comparative Examples, those not explained in the Synthesis Examples are as follows.

### <Component (A-2)>

| | |
|---|---|
| A-2-1: | Polymethyl methacrylate resin (Dianal BR-88, from Mitsubishi Rayon Co., Ltd.; Mw, 576,900; Tg, 105°C) |
| A-2-2: | Polymethyl methacrylate resin (Dianal BR-85, from Mitsubishi Rayon Co., Ltd.; Mw, 263,800; Tg, 105°C) |

### <(B) Inorganic Particles>

B-1: Propylene glycol monomethyl ether dispersion of silica (PMA-ST; solids concentration, 30%; primary particle size, 10 to 15 nm; Nissan Chemical Industries, Ltd.) B-2: Alcohol dispersion of zinc oxide (ZNTANB15WT%-E34; solids concentration, 15%; primary particle size, 10 to 15 nm; from CIK NanoTek Corporation)

### <(C) Ultraviolet Absorber>

| | |
|---|---|
| C-1: | 2-[2-Hydroxy-4-(1-octyloxycarbonylethoxy)phenyl]-4,6-bis(4-phenylphenyl)-1,3,5-triazine (TINUVIN 479, from BASF Japan Ltd.) |
| C-2: | 2,4-Dihydroxybenzophenone (Seesorb 106, from Shipro Kasei Kaisha, Ltd.) |

### <(D) Hindered Amine Light Stabilizer>

D-1: Neutral hindered amine light stabilizer (TINUVIN 249, from BASF Japan Ltd.)

### <(E) Solvent>

E-1: Propylene glycol monomethyl ether

### <(F) Dehydrating Agent>

F-1: Ethyl o-formate

### <(G) Leveling Agent>

G-1: LE-604 (Kyoeisha Chemical Co., Ltd.)

### [5] Production of Coated Articles

### [Examples 1 to 8, Comparative Examples 1 to 4]

The primer compositions obtained in the above Preparation Examples and Comparative Preparation Examples were applied onto surface-cleaned polycarbonate resin plates (thickness, 5 mm; available under the product name Takiron PC Clear 1600 from Takiron Co., Ltd.) by dip coating in such a way as to give a cured film thickness of 5 to 10 µm and heat-cured at 130°C for 90 minutes, thereby forming a primer layer.

The resulting test specimens were allowed to cool to room temperature, following which the silicone compositions in Tables 2 and 3 (HC-1 or HC-2 prepared in Synthesis Example 4 and Comparative Synthesis Example 1) were applied onto the primer layer by dip coating in such a way as to give a cured film thickness of at least 5 µm and up to 10 µm and then cured for 60 minutes at 120°C, forming a siloxane hardcoat layer.

Next, using a Xe₂ excimer lamp having a wavelength of 172 nm, the surface of the siloxane hardcoat layer was irradiated with light to an exposure dose of 2 J/cm², thereby fabricating a photomodified layer having a film thickness of from 0.1 to 0.4 µm.

### [Comparative Example 5]

Aside from application by dip coating to a film thickness of 22 µm for the primer layer and a film thickness of 16 µm for the hardcoat layer, test specimens in Comparative Example 5 were obtained in the same way as in Examples 1 to 8 and Comparative Examples 1 to 4.

### [Comparative Example 6]

Aside from not forming a photomodified layer, test specimens in Comparative Example 6 were obtained in the same way as in Examples 1 to 8 and Comparative Examples 1 to 4.

### [6] Evaluation of Coated Article Properties

Using the coated articles obtained in the above Examples and Comparative Examples as test specimens, various properties were evaluated. The results are shown in Tables 2 and 3.

### (1) Surface Hardness of Film:

The film hardness in this invention was determined by the nanoindentation method using a nanoindenter (ENT-NEXUS, from Elionix, Inc.).

Specifically, the resin substrate having a surface-most siloxane hardcore layer fabricated in the respective above Examples and Comparative Examples was cut to a size of 15 mm × 15 mm, an instant adhesive (Aron Alpha fast-acting all-purpose, from Toagosei Co., Ltd.) was applied onto a customized sample-fixing substrate (10 mm ×10 mm; thickness, 1 mm) and the resin substrate side of the sample was bonded to the fixing substrate, thereby giving a measurement sample.

The surface hardness of the film was determined by fixing the resulting measurement sample to a customized sample-fixing support in such a way that the siloxane hardcoat layer side comes into contact with the indenter, and analyzing by means of specialized software the data generated when a Berkovitch indenter is pressed into the film surface to a load of 0.5 mN within a room temperature (23°C) environment.

The same operation was carried out at three different points on each sample, the surface hardness at each point was determined and their average value was calculated.

### (2) Initial Film Appearance:

The film appearance for the test specimen was visually examined.

### (3) Transparency:

The haze of the film was measured with a haze meter (NDH2000, from Nippon Denshoku Industries Co., Ltd.).

### (4) Primary Adhesion:

In accordance with JIS K5400, six lengthwise and six crosswise slits were made in the test specimen at 2 mm intervals with a razor blade, creating 25 squares. Cellotape^{®} (Nichiban Co., Ltd.) was firmly attached to the scored film, following which the tape was rapidly peeled off toward oneself at 90°. The number of remaining squares (X) where the film did not peel off was indicated as X/25.

### (5) Water Resistance and Water-Resistant Adhesion:

The test specimen was immersed in boiling water for 2 hours, following which an adhesion test was carried out in the same way as in (4) above.

### (6) Abrasion Resistance:

In a Taber abrasion test in accordance with ASTM 1044, a CS-10F abrasion wheel was mounted on an abrasion tester and the haze of the cured film after 1,000 rotations under a load of 500 gf was measured. The abrasion resistance ΔHz (% points) was evaluated as (haze (%) after test) - (haze (%) before test).

### (7) Heat Resistance:

The test specimen was placed in a 110°C oven, the film appearance after 1,000 hours had elapsed was observed, and the heat resistance was rated according to the following criteria.
○: normal
×: cracks are present in film

### (8) Weather Resistance (SUV Accelerated Weathering Test):

The weather resistance was evaluated under the same conditions as those described in WO 2020/066993. That is, the Super UV Tester (SUV), an accelerated weathering tester from Iwasaki Electric Co., Ltd., was used to carry out a 600-hour (50-cycle) test, each cycle being 12 hours long and consisting of 4 hours of irradiation (irradiation intensity, 90 mW/cm²; black panel temperature, 63°C; 70% humidity), 4 hours of darkness (black panel temperature, 63°C; 90% humidity) and 4 hours of condensation (black panel temperature, 30°C; 95% humidity), following which the film was checked for the presence or absence of cracking and peeling and was evaluated according to the criteria shown below.

### [Film Cracking]

The film appearance following the weathering test was evaluated according to the following criteria.
○: Normal
×: Cracks are present

### [Film Peeling]

The condition of the film following the weathering test was evaluated according to the following criteria.
○: Normal
×: Peeling

**[Table 2]**

| Example | | 1 | 2 | 3 | 4 | 5 | 6 | 7 | 8 |
|---|---|---|---|---|---|---|---|---|---|
| Preparation Example (primer compositions) | | 1 | 2 | 3 | 4 | 5 | 6 | 7 | 8 |
| | A-1-1 | 200 | 200 | 100 | - | - | - | - | - |
| | A-1-2 | - | - | - | 100 | 100 | 66 | 134 | 100 |
| | A-2-1 | - | - | 100 | 100 | 100 | 134 | 66 | 34 |
| | A-2-2 | - | - | - | - | - | - | - | 66 |
| Formulation (pbw, solids basis) | B-1 | 21 | 34 | 21 | 21 | - | - | - | - |
| | B-2 | - | - | - | - | 21 | 21 | 21 | 21 |
| | C-1 | - | - | - | 7 | 7 | 7 | 7 | 7 |
| | C-2 | - | - | - | 34 | 34 | 34 | 34 | 34 |
| | D-1 | - | - | 7 | 7 | 7 | 7 | 7 | 7 |
| Mw of overall component (A) | | 87,800 | 87,800 | 475,000 | 483,300 | 475,000 | 475,000 | 547,000 | 345,800 |
| Si(OMe)₃ content in component (A) (wt%) | | 10.2 | 10.2 | 4.7 | 5.1 | 4.7 | 4.7 | 3.1 | 6.3 |
| Silicone composition applied over primer layer | | HC-1 | HC-1 | HC-1 | HC-1 | HC-1 | HC-1 | HC-1 | HC-1 |
| Photomodification treatment | | ○ | ○ | ○ | ○ | ○ | ○ | ○ | ○ |

| [Evaluation Results] | | | | | | | | | |
|---|---|---|---|---|---|---|---|---|---|
| Surface hardness (Gpa) | | 0.29 | 0.31 | 0.29 | 0.27 | 0.29 | 0.29 | 0.28 | 0.28 |
| Initial film appearance | | normal | normal | normal | normal | normal | normal | normal | normal |
| Transparency: Haze (%) | | 0.8 | 0.9 | 0.8 | 0.3 | 0.6 | 0.6 | 0.8 | 0.6 |
| Primary adhesion | | 25/25 | 25/25 | 25/25 | 25/25 | 25/25 | 25/25 | 25/25 | 25/25 |
| Water-resistant adhesion | | 25/25 | 25/25 | 25/25 | 25/25 | 25/25 | 25/25 | 25/25 | 25/25 |
| Abrasion resistance, ΔHz | | 1.6 | 1.5 | 1.5 | 1.8 | 1.5 | 1.8 | 1.6 | 1.6 |
| Heat resistance | | ○ | ○ | ○ | ○ | ○ | ○ | ○ | ○ |
| Weather resistance (600 hours) | Film cracking | ○ | ○ | ○ | ○ | ○ | ○ | ○ | ○ |
| | Film peeling | ○ | ○ | ○ | ○ | ○ | ○ | ○ | ○ |

**[Table 3]**

| Comparative Example | | 1 | 2 | 3 | 4 | 5 | 6 |
|---|---|---|---|---|---|---|---|
| Comparative Preparation Example (primer compositions) | | 1 | 2 | 3 | 4 | 5 | 6 |
| | A-1-1 | - | - | 200 | 200 | 200 | 200 |
| | A-1-2 | - | - | - | - | - | - |
| | A-2-1 | 200 | 200 | - | - | - | - |
| | A-2-2 | - | - | - | - | - | - |
| Formulation (pbw, solids basis) | B-1 | 21 | 21 | 21 | 50 | 21 | 21 |
| | B-2 | - | - | - | - | - | - |
| | C-1 | 7 | 7 | - | - | - | - |
| | C-2 | 34 | 34 | - | - | - | - |
| | D-1 | 7 | 7 | - | - | - | - |
| Molecular weight of component (A) | | 576,900 | 576,900 | 87,800 | 87,800 | 87,800 | 87,800 |
| Si(OMe)₃ content in component (A) (wt%) | | 0 | 0 | 10.2 | 10.2 | 10.2 | 10.2 |
| Silicone composition applied over primer layer | | HC-1 | HC-2 | HC-2 | HC-1 | HC-1 | HC-1 |
| Photomodification treatment | | ○ | ○ | ○ | ○ | ○ | × |

| [Evaluation Results] | | | | | | | |
|---|---|---|---|---|---|---|---|
| Surface hardness (GPa) | | 0.28 | 0.33 | 0.35 | 0.33 | 0.28 | 0.30 |
| Initial film appearance | | normal | normal | normal | normal | normal | normal |
| Transparency: Haze (%) | | 0.4 | 0.6 | 0.5 | 1.2 | 0.8 | 0.6 |
| Primary adhesion | | 25/25 | 0/25 | 0/25 | 20/25 | 25/25 | 25/25 |
| Water-resistant adhesion | | 0/25 | 0/25 | 0/25 | 25/25 | 25/25 | 25/25 |
| Abrasion resistance, ΔHz | | 1.8 | 13.3 | 12.8 | 1.6 | 1.9 | 12.8 |
| Heat resistance | | × | × | ○ | ○ | × | ○ |
| Weather resistance (600 hours) | Film cracking | - * | - * | - * | × | × | ○ |
| | Film peeling | × | × | × | ○ | ○ | ○ |

| | | | | | | | |
|---|---|---|---|---|---|---|---|
| *Unable to determine due to peeling of the film | | | | | | | |

As shown in Table 2, in the coated articles of Examples 1 to 8 which satisfy the requirements of the invention, the film transparency and the film adhesion with the polycarbonate resin substrate are good and the abrasion resistance ΔHz is 2 points or lower, indicating excellent abrasion resistance. In addition, following the heat resistance test and also following the SUV weathering test, there was no film cracking or peeling, demonstrating both excellent heat resistance and excellent weather resistance.

By contrast, as shown in Table 3, in cases where, as in Comparative Example 1 and Comparative Example 2, a vinyl copolymer having no alkoxysilyl groups was used, cracks arose following the heat resistance test and film peeling arose after the SUV weathering test. This suggests that the above alkoxysilyl group-containing vinyl copolymers have the effect of increasing the heat resistance and weather resistance of photomodified layer-containing coated articles.

Even in cases where, as in Comparative Example 3, an alkoxysilyl group-containing vinyl copolymer was used, when an ultraviolet absorber was not included in the hardcoat layer, the heat resistance was good but the abrasion resistance worsened and, following the SUV weathering test, film peeling arose. The reason is thought to be that, because an ultraviolet absorber was not included in the hardcoat layer, the irradiated light at the time of photomodification reached the primer layer, degrading the primer layer and causing film adhesion to worsen.

In cases where, as in Comparative Example 4, a large amount of inorganic particles was incorporated and in cases where, as in Comparative Example 5, the film thickness was excessive, the balance between thermal expansion and stress relaxation of the primer layer broke down, adhesion worsened and early cracking arose in heat resistance tests and weathering tests.

In cases where, as in Comparative Example 6, a vinyl copolymer having alkoxysilyl groups was used as a primer ingredient and a siloxane hardcoat layer containing an ultraviolet absorber was formed over the primer layer, the heat resistance and SUV weather resistance were good, but because there was no photomodified layer, a good abrasion resistance was not achieved.

Based on the above results, it is apparent that the coated articles of Examples 1 to 8 which satisfy the conditions of the invention have excellent film transparency, abrasion resistance, heat resistance and weather resistance.

## Claims

1. A coated article comprising a resin substrate, a primer layer provided on the resin substrate, a hardcoat layer provided on the primer layer, and a photomodified layer formed on a surface-layer portion of the hardcoat layer,
wherein the primer layer is a cured film of a primer composition comprising:
(A) 100 parts by weight of a vinyl (co)polymer, and
(B) 1 to 19 parts by weight of inorganic particles having a median diameter, as measured by the dynamic light scattering method, of from 1 to 100 nm,
the vinyl (co)polymer (A) including (A-1) a vinyl (co)polymer having alkoxysilyl groups and said primer layer having a film thickness of from 1 to 20 µm; and
the hardcoat layer is a cured film of a silicone composition comprising:
(a) a silicone resin obtained by (co)hydrolytically condensing at least one compound selected from alkoxysilanes of formula (1) below
R¹ₘSi(OR²)₄₋ₘ (1)
(wherein each R¹ is independently a hydrogen atom or a substituted or unsubstituted monovalent hydrocarbon group and a plurality of R¹ may mutually bond to form a linked group, each R² is independently an alkyl group of 1 to 3 carbon atoms, and m is 0, 1 or 2) and (partial) hydrolytic condensates thereof,
(b) colloidal silica, and
(c) an ultraviolet absorber,
said hardcoat layer having a film thickness of from 1 to 15 µm.

2. The coated article of claim 1, wherein the photomodified layer includes silicon dioxide.

3. The coated article of claim 1 or 2, wherein the ultraviolet absorber (c) includes a reactive ultraviolet absorber of general formula (2) below 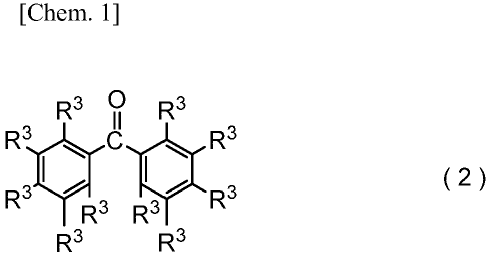
[wherein each R³ is independently a hydrogen atom, a hydroxyl group, an alkyl group of 1 to 5 carbon atoms or a group of general formula (3) below, at least one occurrence of R³ being a group of general formula (3) below
*-O-(CH₂)ⱼ-SiR⁴ₖ(OR⁵)₃₋ₖ (3)
(wherein R⁴ and R⁵ are each independently an alkyl group of 1 to 5 carbon atoms, j is an integer from 1 to 8, k is an integer from 0 to 2, and the asterisk * denotes a bond with a neighboring atom)] and a (partial) hydrolytic condensate thereof.

4. The coated article of any one of claims 1 to 3, wherein the hardcoat layer has a surface hardness as measured by the nanoindentation method of from 0.10 to 0.50 GPa.

5. The coated article of any one of claims 1 to 4, wherein the inorganic particles (B) include one or more type of particle selected from silica, zinc oxide, titanium oxide and cerium oxide.

6. The coated article of any one of claims 1 to 5, wherein the primer composition includes (A-1) a vinyl (co)polymer having alkoxysilyl groups and ultraviolet-absorbing groups.

7. The coated article of any one of claims 1 to 6, wherein the primer composition further comprises (C) one or more ultraviolet absorber selected from triazine derivatives and benzophenone derivatives.

8. The coated article of any one of claims 1 to 7, wherein the primer composition further comprises (D) a hindered amine light stabilizer.

9. The coated article of any one of claims 1 to 8, wherein the film thickness of the primer layer is from 3 to 15 µm and the film thickness of the hardcoat layer is from 3 to 13 µm.

10. A method for producing the coated article of any one of claims 1 to 9, which method comprises the step of forming a photomodified layer on a surface-layer portion of the hardcoat layer by irradiating a surface of the hardcoat layer with light having a wavelength of 300 nm or less.
